# EUROPEAN PATENT APPLICATION

(11) **EP 4 660 591 A1**
(43) Date of publication of application: **10.12.2025**
(21) Application number: 24180086.1
(22) Date of filing: 05.06.2024
(51) Int. Cl.: G01D 21/00

(54) **METHOD FOR DETECTING AND MONITORING A PROCESS USING A MEASURING ARRANGEMENT**

(71) Applicant: ABB SCHWEIZ AG, 5400 Baden (CH)
(72) Inventor: SOSALE, Guruprasad, 80997 München (DE); TABELANDER, Stefan, 32052 Herford (DE); SCHROEDER, Karsten, 32469 Petershagen (DE); SCHILG, Marcel, 31606 Warmsen (DE); DECKERT, Hendrik, 61118 Hesse (DE)
(74) Representative: Maiwald GmbH

(57) **Abstract**

The invention relates to a method (1) for detecting and monitoring a process (600) by means of a measuring arrangement (100) comprising a sensor assembly (110) and an electronics assembly (130), which comprises the steps of providing (20) the sensor assembly (110) for detecting a measuring value of the process (600) to be detected, connecting (30) the sensor assembly (110) to the electronics assembly (130) for transmitting the measuring value of the process (600) to be detected from the sensor assembly to the electronics assembly, allowing (40) the electronics assembly (130) retrieving a characteristic group of the sensor assembly (110) comprising a thermal characteristic and/or a mechanical characteristic and/or an electrical characteristic of the sensor assembly (110), and outputting (70), by means of the electronics assembly, the measuring value of the process (600) and/or the characteristic group of the sensor assembly (110).

## Description

### FIELD OF INVENTION

The present disclosure relates to a method for detecting and monitoring a process by means of a measuring arrangement comprising a sensor assembly and an electronics assembly, a measuring arrangement for detecting and monitoring a process, and a use of a measuring arrangement for deriving a process measurement in real-time in an automation system.

### BACKGROUND

Industrial automation systems may provide productive and cost-efficient solutions for various applications for modern continuous, batch and discrete processes. Typically, measurement of process parameters such as temperature, pressure etc., are all typically carried out by sensors. The values from these sensors are typically used to control or monitor the running of the process. It is thus highly desired to ensure that the sensors may accurately measure the medium parameters and accurately capture changes in the state of the process, when the sensors are usually installed in intimate contact with the process fluid.

### SUMMARY

It may be seen as an objective of the invention to provide an improved method for perform a process measurement in an accurate and reliable way.

The objective is achieved by the subject matter of the independent claims. The dependent claims, the following description and the drawings show embodiments of the invention.

According to a first aspect of the present, a method for detecting and monitoring a process by means of a measuring arrangement, which comprises a sensor assembly and an electronics assembly is provided. The method comprises the following steps:
- providing the sensor assembly of the measuring arrangement for detecting a measuring value of the process to be detected;
- connecting the sensor assembly to the electronics assembly of the measuring arrangement for transmitting the measuring value of the process to be detected from the sensor assembly to the electronics assembly;
- allowing the electronics assembly retrieving a characteristic group of the sensor assembly comprising a thermal characteristic and/or a mechanical characteristic and/or an electrical characteristic of the sensor assembly;
- outputting, by means of the electronics assembly, the measuring value of the process and/or the characteristic group and/or the second characteristic group of the sensor assembly.

Optionally and additionally, the method may further comprise the step of determining a second characteristic group of the sensor assembly comprising a second thermal characteristic and/or a second mechanical characteristic and/or a second electrical characteristic of the sensor assembly corresponding to the measuring value of the process. Accordingly, the method may comprise the step of outputting, by means of the electronics assembly, the measuring value of the process and/or the characteristic group and/or the second characteristic group of the sensor assembly.

The term the measuring arrangement may be understood broadly and may relate to a measuring system for a process that comprises a plurality of assemblies that may be arranged in a way to measure the measuring value or process parameters and, optionally, to measure the performance parameters or characteristics of at least one assembly of the measuring arrangement.

The sensor assembly may comprise one or more non-invasive sensors. A non-invasive sensor may be mounted on a process pipe or an industrial piping and configured to infer process parameters or process measuring values without the need for direct contact with the medium, or at least without the need to violate a process vessel or a process pipe for the installation, for example via a drilling and a subsequent welding if necessary. Such a non-invasive sensor, such as a ultrasonic flow sensor or a surface mounted temperature sensor, may accurately measure properties of the fluid or the medium inside the process vessel or the process pipe, for example, via some model-based conclusions or corresponding signal processing. Hence, the sensor assembly may be non-invasive sensor assembly. A typical sensor assembly may for example comprise a sensor element, such as ultrasound transducers and receivers in case of flow meters, or for example resistance temperature detectors (RTDs) in case of a temperature measurement device. These sensor elements may usually be suitably packaged, in order to comply with sometimes harsh conditions of industrial usage. Furthermore, a frontend electronics may be provided in the sensor assembly.

Typically, the sensor assembly and the electronics assembly may be designed to be an integrated or integral piece in the manufacturing facility and supplied a s a fully configured one-piece unit. However, the sensor assembly of the present disclosure may be provided or manufactured separately and independently, so that the electronics assembly may be arranged remotely in a predefined distance away from the sensor assembly, for example, when there may be a need to place the sensor assembly in an ambient temperature that may be too high or too low.

Further, when the sensor assembly need to be replaced due to the damage or unsuitability, it may be advantageous to provide the electronics assembly independently of the sensor assembly. This may apply, for example, for the temperature sensor or a ultrasonic flow measurement device as a clamp on sensor. In this case, the sensor assembly may be replaced or exchanged by a second assembly by disconnecting the sensor assembly from the electronics assembly and connecting the second assembly with the common electronics assembly.

Generally, the sensor assembly may be designed and manufactured to have a unique characteristic group, in particular the thermal, mechanical and/or electrical characteristics representing the properties and the performance of the sensor assembly. Once characterized, the thermal, mechanical and/or electrical characteristics need to taken into account in processing electronics to provide an accurate output of the desired process or sensed parameter. The sensor assembly and the electronics assembly may be connected wirelessly for example via Wi-Fi (wireless fidelity), Bluetooth, NFC (Near Field Communication) or WSNs (Wireless Sensor Networks), and/or via a cable, so that the characteristic group may be transmitted from the sensor assembly and inputted into the remote electronics assembly. Prior to the transmission, the characteristic group may be stored within the sensor assembly, for example, in a frontend electronics storage which may be provided at the sensor assembly.

By determining the second characteristic group, in particular the second thermal characteristic and/or the second mechanical characteristic and/or the third mechanical characteristic of the sensor assembly, for example during the process measurement, the second characteristic group may be compared with the characteristic group as the first characteristic group of the sensor assembly. For example, if the second characteristic group may be determined to be identical to the characteristic group of the sensor assembly, which may be characterized and modelled during or right after the manufacturing, this may be indicative of a precise and reliable measurement of the sensor assembly and of the measuring arrangement in the application environment. Hence, an on-site calibration check may be performed during the process measurement, when the sensor assembly may be connected with the electronics assembly. The between of the characteristic group may be determined and stored as single device calibration data or as a kind of type calibration data or group calibration data for the sensor assembly of the same type.

In case that the second characteristic group may be determined to differ from the retrieved characteristic group of the sensor assembly 100, it may be indicative of that the environment, in which the sensor assembly may be applied, may require to modify or model the characteristic group of the sensor assembly to fit the second characteristic group, for example based on the characteristic model of the sensor assembly and the determined thermal characteristic behavior and/or mechanical characteristic behavior and/or electrical characteristic behavior of the sensor assembly. Alternatively, the difference between the second characteristic group and the retrieved characteristic group of the sensor assembly may indicate that the sensor assembly may be deficient or not suitable for the applied environment of the process measurement. In this case, the sensor assembly may need to be repaired or replaced or exchanged for the process measurement. Thus, the method may advantageously allow a reliable and efficient process measurement by retrieving the unique and pre-characterized, sensorspecific characteristic group or the characteristic model and by determining the second characteristic group of the sensor assembly during the process measurement by means of the measuring arrangement.

For example, the electronics assembly may be configured to only output the measuring value of the process and/or the characteristic group and/or the second characteristic group of the sensor assembly, when the characteristic group and the second characteristic group of the sensor assembly may be determined to be identical or the difference between characteristic group and the second characteristic group of the sensor assembly may be determined to be within a predefined tolerance range. Alternatively or additionally, the electronics assembly may be configured to not output the measuring value of the process, but to optionally send a warning signal, when the difference between characteristic group and the second characteristic group of the sensor assembly may be determined to exceed a predefined tolerance range, indicating that the sensor assembly may have deficiency or not work properly and need to be exchanged.

According to an embodiment, the method may further comprise the step of allowing the electronics assembly retrieving a characteristic model of the sensor assembly for determining a thermal characteristic behavior and/or a mechanical characteristic behavior and/or an electrical characteristic behavior of the sensor assembly.

The term "retrieving" may be understood broadly as a process of accessing, fetching, and obtaining specific pieces of information from an internal and/or external database, storage system, or any other information system. This may involve querying via a system using specific criteria or commands to locate and extract the desired data for further use, analysis, or processing. For example, in the characteristic model, the thermal, mechanical and/or electrical characteristic behaviors may be represented by coefficients and/or factors, also known as parameters, of a linear or non-linear model that may act on the sensors inputs in the sensor assembly to provide the necessary non-invasive process variable.

The non-invasive sensor, such as a non-invasive temperature sensor, may have a sensing assembly consisting of one or more sensors, which may be primary sensor elements of the sensing assembly. The build of the sensor assembly has a characteristic thermal, mechanical, and/or electrical behaviors that may be determined at the factory but need to be input into the electronics assembly as measurement electronics to obtain an accurate process measurement. Hence, the measurement electronics has the modelled behavior of the attached sensor but no a priori knowledge of the device specific characteristics to fit the characteristic model. In other words, the sensor assembly may be designed and manufactured to have the unique and sensorspecific characteristic model for determining the thermal, mechanical and/or electrical behaviors that need to be characterized and modelled. Once characterized, the thermal, mechanical and/or electrical behaviors need to taken into account in the processing electronics to provide an accurate output the desired process or sensed parameter.

For example, the thermal characteristic of the sensor assembly may be modelled by a standard heat transfer equation that may capture a thermal resistance and a temperature distribution along a construction of the sensor assembly and/or the process pipe in a predefined environment, in which the sensor assembly is applied. For example, a model equation may be provided for the sensor assembly with the characterizing parameters, such as T_{process} = a *T₁ + b * T₂ + c, wherein Tprocess may be the temperature to be detected and determined, a, b, c may, respectively, be a first, second or third thermal characteristic, or coefficient of the sensor assembly, and T₁ and T₂ may be primary sensor readings of the temperature inside the sensor assembly.

For example, the mechanical characteristic, such as a vibration characteristic, may represent a minute displacement or a strain, a stress level, and/or a frequency-dependent characteristic of a mechanical part of the sensor assembly. For example, an electromagnetic characteristic as an electrical characteristic may represent an impedance considering a resistance, an inductance, or a capacitance of the sensor assembly.

According to another embodiment, the method may further comprise the step of validating the characteristic group of the sensor assembly and/or the characteristic model of the sensor assembly, by means of a validation assembly of the measuring arrangement, before the providing the sensor assembly for detecting the measuring value of the process to be detected.

The non-invasive sensor assembly may be placed on the validation assembly, which may also be a calibration setup, which may be calibrated to represent the thermal, mechanical and/or electrical conditions in which the sensor assembly has to operate. On this validation setup, the model parameters to ensure the required performance of the sensor assembly may be derived using the processing electronics. Optionally, the second characteristic group of the sensor assembly may be generated, for example, by the calibration setup with a pre-defined on-site calibration setup or calibrator.

Considering that the characteristics of the sensor assembly may be unique to each build of the measuring arrangement, a sensor type or a generalization to a class of sensor assembily may be challenged. This may pose the challenge of how to maintain these sensors in the field when a failure occurs or the only part of the sensor assembly or electronics assembly is defective. In order to inform the electronics assembly in the process field what may be the characteristic parameters of the passive non-invasive sensor assembly, the validation or calibration step may be performed in the manufacturing location of the sensor assembly during the manufacturing or right after the production of the sensor assembly.

It may be advantageous that, by using the validation assembly for each fabricated sensor assembly, the sensor-specific characteristics or parameters may be validated or tested individually for each single sensor assembly. As a result, the tolerance of the manufacturing process for the sensor assembly and the measuring arrangement may be increased, and each sensor assembly may comprise the respective individual, unique property and performance parameters, which may be validated and stored to be taken into consideration for the later process measurement. In this way, a strict manufacturing process to produce multiple sensor assemblies with predefined, common sensor parameters or characteristics may not be required. This may increase the fabrication efficiency, simplify the manufacturing process and reduce the production costs for the measuring arrangement and the sensor assembly.

Sensor assemblies of the same type may be validated to comprise different characteristic groups, namely different thermal, mechanical and/or electrical characteristics. By contrast, sensor assemblies of various types may be validated, by means of the validation assembly, to comprise the same characteristic group, namely the same thermal, mechanical and/or electrical characteristics.

By using the individual validation process for each sensor assembly after the sensor assembly being manufactured may enhance the practical application of the non-invasive sensor assembly in the process field, as the manufacturing process parameters may comprise a relative large tolerance, without sacrificing the accuracy of the process measurement, as the characteristics for each manufactured sensor assembly may be determined retrospectively.

The type of the sensor assembly may, for example, be, but not limited to be, a temperature sensor, a pressure sensor, distance sensor, a mechanical stiffness sensor, a light sensor, a flow sensor, or a humidity sensor. Further, as a common and universal electronics assembly and/or a common validation assembly may be provided for and connectable with various sensor assemblies of the same type or of different types. this may further reduce the manufacturing costs and ease the manufacturing process for the sensor assembly and the measuring arrangement and ease the repair and the replacement of the sensor assembly in the process field.

According to another embodiment, the step of the connecting the sensor assembly to the electronics assembly may comprise the step of identifying the sensor assembly by the electronics assembly via a coded approach and/or a non-coded approach at the sensor assembly and/or via a database.

For example, the sensor assembly of a particular type with a coding that may be given into the integrated processing electronics as a frontend electronics in the sensor assembly, so that the electronics may comprise a method to select the correct measurement parameters associated with the sensor assembly, in order to help the electronics assembly identify the nature of the sensor assembly by the readouts of the coding from the sensor assembly or from the database.

For example, for the process measurement, such as a temperature measurement, replacing the sensor assembly may be simplified as it may merely consist of a standardized passive measurement device, for example an RTD (resistance temperature detector) or a thermocouple, which may have readily available and known characteristics. As such, the processing electronics of the sensor assembly and/or the electronics assembly may just need to be told what type of sensor assembly may be installed to the process, as the sensor of the sensor assembly may belong to a well established class of devices. Such a well established class of sensors may be built according to an international standard or specifications. For instance, the RTD for the temperature measurement may be standardized to match the temperature dependent resistive curves outlined in IEC 60751 and categorized in classes, such as Class A, B, etc. Such curves may be programmed into the electronics assembly and/or into a database. When the processing electronics or the electronics assembly may be separated from the sensor in the field, the sensor class need to be known and inputted into the electronics assembly. It may also need to be known and associated or attached uniquely to the sensor assembly, for example, as a packaged sensor element. The associated preprogrammed curve may then be selected automatically. This approach may be the same for numerous technologies in the market today where the class may be proprietary or based on global standards.

According to another embodiment, the step of validating the characteristic group of the sensor assembly and/or the characteristic model of the sensor assembly may comprise the step of storing the characteristic group of the sensor assembly and/or the characteristic model of the sensor assembly by a coded and/or non-coded approach inside or at the sensor assembly and/or in the database.

The non-invasive sensor assembly may be given a unique serial number for the identification. Further, the characteristic group, in particular, the thermal, mechanical and/or electrical characteristics of the sensor assembly and its model parameters may be saved in a digital form, for example in the database and referenced to the unique serial number for the identification. For example, the model parameters may be an alphanumeric code or a semantic text. Alternatively, the characteristic group may be encoded by a encoding unit with a coded approach such that only the associated electronics assembly may be able to interpret, for example, by using an appropriate key or resolving a lookup table and use the information in the correct manner. In this way, the non-invasive sensor assembly may be mounted in an industrial setting independent of any processing electronics assembly used to output the non-invasive measurement value of the process.

Accordingly, the step of allowing the electronics assembly retrieving the characteristic group of the sensor assembly and/or the characteristic model of the sensor assembly may be performed via the coded approach and/or the non-coded approach at or from the sensor assembly and/or via the database.

According to another embodiment, the database may be arranged in the sensor assembly and/or in the electronics assembly and/or in a server and/or in a cloud system.

According to another embodiment, for the determining the second characteristic group of the sensor assembly, the step of the allowing the electronics assembly retrieving the characteristic group of the sensor assembly may comprise the step of modifying the characteristic group of the sensor assembly for detecting the measuring value of the process by changing the thermal characteristic and/or the mechanical characteristic and/or the electrical characteristic of the sensor assembly, depending on at least one process parameter comprising a pressure, a speed of sound, a flow rate, a density, a viscosity and/or a thermal conductivity of a medium in the process to be detected, and/or a material type and/or a dimension of a process pipe. The at least one process parameter can be determined by a measurement, continuously or temporarily, it can be estimated during commissioning or installation or during a maintenance, it can be taken from customer interviews and/or asked for in a device configuration procedure menu. It can also be taken from open literature, e.g. regarding material data. In this way, an on-site re-calibration or a re-adjustment of the model may be performed.

Alternatively, the step of the allowing the electronics assembly retrieving the characteristic group of the sensor assembly may be performed, when the sensor assembly may be connected to a suitable electronics assembly and the model parameters or the characteristic group associated with the unique identification of the sensor assembly may be inputted into the electronics assembly automatically. This may be via prompts during the setup of the electronics assembly through a human machine interface or through a wireless approach where the unique model parameters associated with the sensor assembly may be automatically read into the electronics assembly with technologies such as RFID, Bluetooth packets or other connection approaches. Upon receiving the characteristic group, the output of the electronics assembly may better match the desired result of the measuring value of the process to be detected.

According to another embodiment, the step of the modifying the characteristic group of the sensor assembly for detecting the measuring value of the process may be performed via a human machine interface.

For example, the electronics assembly may prompt the user to validate and check, or to automatically verify, the model characteristics or the characteristic group, in order to do one or more of the following:
- input the model characteristics so as to get a more accurate reading,
- cross check the coding and model characteristics such that the values are within known limits or tolerances,
- potentially access and cross check existing manufacturing databases to authenticate the information of the model characteristics from the sensor.

In case of a defective sensor assembly or electronics assembly, the respective component may be exchanged independently of the other without sacrificing the performance of the measuring arrangement. It may be noted that the characteristic group or the model parameters may not be unique as the sensor assemblies of different types may have similar characteristics but each device has a unique ID and corresponding characteristic group or model parameters. Different sensor assemblies may have similar codes indicating that they may have the same characteristic group or model parameters, allowing for the interchange of the sensor assemblies without a loss of the functionality, the performance, and the measurement accuracy.

According to another embodiment, the method may further comprise the following steps:
- adjusting the measuring value of the process to be a second measuring value of the process, after the modifying the characteristic group of the sensor assembly and/or the determining the second characteristic group of the sensor assembly, based on the characteristic model of the sensor assembly by following the determined thermal characteristic behavior and/or the mechanical characteristic behavior and/or the electrical characteristic behavior of the sensor assembly; and
- outputting the second measuring value of the process along with the measuring value of the process and/or the characteristic group and/or the second characteristic group of the sensor assembly.

Furthermore, the characteristic group or the model parameters of the sensor assembly may be enhanced or modified to include changing and varying characteristics of the onsite measurement process to increase the accuracy of the process measurement. For many non-invasive measurements in process facilities, additional process information such as pressure, flowrate, density, viscosity, thermal conductivity, pipe material and dimensions may be required for a more accurate representation of the measured non-invasive quantity. Such information may form additional variable coefficients or factors in the representative thermal, mechanical and/or or electrical model characteristics of the non-invasive sensing assembly. However, these parameters may not be derived in the manufacturing facility, but inputted based on the nominal conditions, for example, based on the validated and verified characteristic model, in particular the thermal, mechanical and/or electrical characteristic behaviors.

For instance, the default characteristic model of the sensor assembly may be set for a process measurement on a metal pipe, however, the sensor assembly may be used on a plastic pipe with a different wall thickness. In this case, the additional model characteristics may be derived from inputting the additional process or situational information into a calculation tool for the characteristic model either built into the connecting electronics assembly or in an offline estimation tool in a database located in a server or a cloud system. Accordingly, the characteristics and the characteristic model may be adapted to the changed pipe material and the wall thickness, and the measuring value may be adjusted to be a second measuring value based on the modified or adapted characteristic model, in order to result in a more accurate process measurement corresponding to the real process field.

According to another embodiment, the step of the outputting the measuring value and/or the second measuring value of the process and/or the characteristic group and/or the second characteristic group of the sensor assembly may be performed by transmitting the measuring value and/or the second measuring value of the process and/or the characteristic group and/or the second characteristic group of the sensor assembly from the electronics assembly to a display assembly and/or a control assembly.

In this way, the output of the calculation for the characteristic model may be a set of model parameters that may be once again in a similar or different alphanumeric, or digital coding that may be inputted into the electronics assembly either manually or automatically. The model characteristics or parameters may always be used in the associated electronics assembly for providing the necessary non-invasive characteristic output.

According to a second aspect, a measuring arrangement is provided. The measuring arrangement comprises a sensor assembly, which is configured to detect a measuring value of the process, and an electronics assembly, which is to connect to the sensor assembly, so that the measuring value of the process to be detected can be transmitted from the sensor assembly to the electronics assembly.

The electronics assembly is configured to retrieve a characteristic group of the sensor assembly comprising a thermal characteristic and/or a mechanical characteristic and/or an electrical characteristic of the sensor assembly, via a coded approach and/or a non-coded approach at the sensor assembly, and/or via a database being arranged in the sensor assembly and/or in a server and/or in a cloud system. Further, the electronics assembly is configured to output the measuring value of the process and/or the characteristic group of the sensor assembly to a display assembly and/or a control assembly.

According to an embodiment, the electronics assembly may be configured to determine a second characteristic group of the sensor assembly comprising a second thermal characteristic and/or a second mechanical characteristic and/or a second electrical characteristic of the sensor assembly corresponding to the measuring value of the process.

Accordingly, the electronics assembly may be configured to output the measuring value of the process and/or the characteristic group and/or the second characteristic group of the sensor assembly to a display assembly and/or a control assembly.

According to an embodiment, the electronics assembly may be configured to retrieve a characteristic model of the sensor assembly for determining a thermal characteristic behavior and/or a mechanical characteristic behavior and/or an electrical characteristic behavior of the sensor assembly. The electronics assembly may be further configured to allow modifying the characteristic group of the sensor assembly for detecting the measuring value of the process by means of a human machine interface. In addition, the electronics assembly may be configured to allow adjusting the measuring value of the process to be a second measuring value of the process, after the modifying the characteristic group of the sensor assembly and/or the determining the second characteristic group of the sensor assembly, based on the characteristic model of the sensor assembly by following the determined thermal characteristic behavior and/or the mechanical characteristic behavior and/or the electrical characteristic behavior of the sensor assembly.

According to another embodiment, the sensor assembly may comprise at least one non-invasive sensor.

The sensor assembly may thus be a non-invasive sensor assembly. A non-invasive sensor may be mounted on a process pipe or an industrial piping and configured to infer process parameters or process measuring values without the need for direct contact with the medium, or at least without the need to violate a process vessel or a process pipe for the installation, for example via a drilling and a subsequent welding if necessary. Such a non-invasive sensor, such as a ultrasonic flow sensor or a surface mounted temperature sensor, may accurately measure properties of the fluid or the medium inside the process vessel or the process pipe.

According to another embodiment, the measuring arrangement may further comprise a validation assembly, which may be configured to validate the characteristic group of the sensor assembly and/or the characteristic model of the sensor assembly, before the sensor assembly may be provided for detecting the measuring value of the process to be detected.

According to another aspect, the use of a measuring arrangement of the present disclosure is provided for deriving a process measurement in real-time in an automation system.

Further, there may be provided a computer program that comprises machine-readable instructions that, when executed by one or more computers and/or compute instances, cause the one or more computers and/or compute instances to perform a method for detecting and monitoring a process by means of a measuring arrangement of the present disclosure.

There may be provided a non-transitory machine-readable data carrier and/or a download product with the computer program. A download product is an instance of the computer program that may be sold and downloaded online for immediate fulfilment in lieu of physically shipping a machine-readable data carrier.

In an example, there may be provided one or more computers and/or compute instances with the computer program comprising machine-readable instructions that, when executed by one or more computers and/or compute instances, cause the one or more computers and/or compute instances to perform a method for detecting and monitoring a process by means of a measuring arrangement of the present disclosure, and/or with the machine-readable data carrier and/or download product with the computer program.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

It should be noted that the above examples may be combined with each other irrespective of the aspect involved. Accordingly, the method may be combined with structural features and, likewise, the apparatus and the system may be combined with features described above with regard to the method.

These and other aspects will be apparent from and elucidated with reference to the embodiments as per the drawings described hereinafter.

### BRIEF DESCRIPTION OF THE FIGURES

Examples of the disclosure will be described in the following with reference to the following drawings.
- Fig. 1: shows schematically a flow chart illustrating a method for detecting and monitoring a process by means of a measuring arrangement according to the present disclosure;
- Fig. 2: shows schematically an example of a measuring arrangement comprising a validation assembly according to the present disclosure;
- Fig. 3: shows schematically an example of a measuring arrangement according to the present disclosure;
- Fig. 4: shows schematically an example of a measuring arrangement with a human machine interface according to the present disclosure.

The figures are merely schematic representations and serve only to illustrate examples of the disclosure. Identical or equivalent elements are in principle provided with the same reference signs.

### DETAILED DESCRIPTION OF EMBODIMENTS

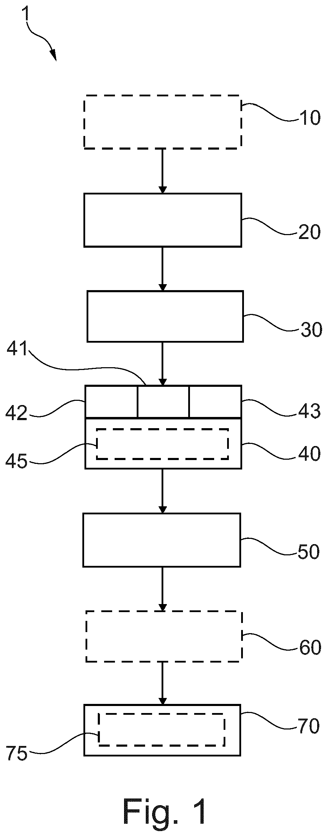

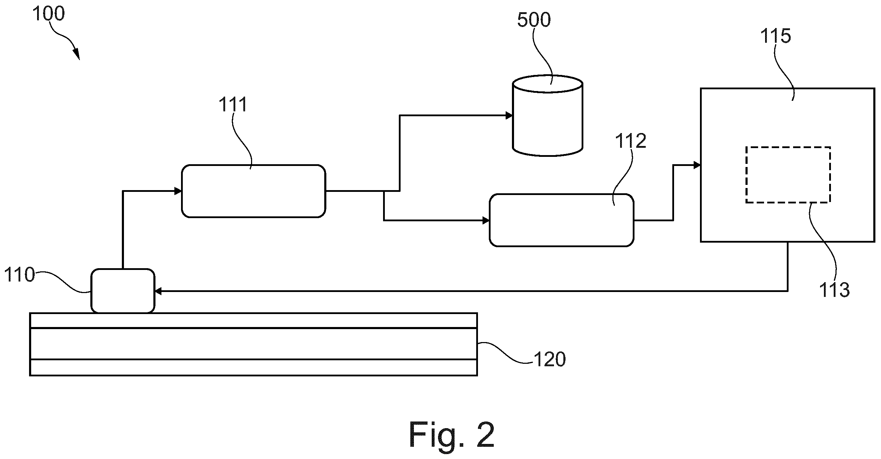

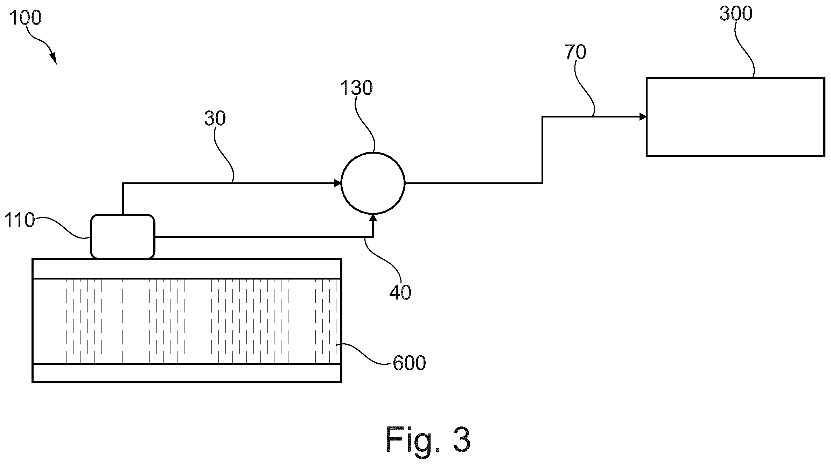

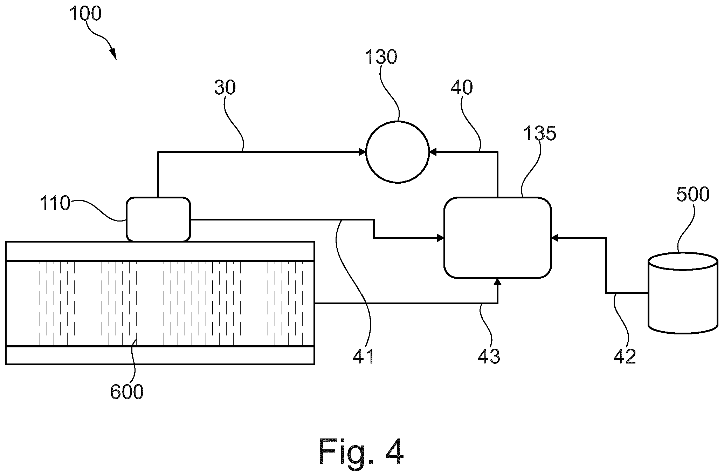

Fig. 1 shows schematically a flow chart illustrating a method 1 for detecting and monitoring a process 600, as shown in Fig. 3 and Fig. 4, by means of a measuring arrangement 100, as shown in Fig. 2 to Fig. 4, which comprises a sensor assembly 110 and an electronics assembly 130.

The method 1 comprises a plurality of steps 10 to 70. In step 20, the sensor assembly 110 of the measuring arrangement 100 is provided for detecting a measuring value of the process 600 to be detected. The sensor assembly 100 may comprise a non-invasive sensor, which may be arranged or mounted at the process 600 to be detected to infer the process parameters as measuring values without directing in contact with the medium inside the process 600 or without violating the process pipe for the installation, for example via drilling or welding. For example, the non-invasive sensor of the sensor assembly 100 may be a ultrasonic flow sensor and/or a surface mounted temperature sensor. In other words, the sensor assembly 100 may be arranged outside the process 600 but in the vicinity of the process 600 and assigned to the process 600 for the process measurement.

In step 30, the sensor assembly 110 may be connected to the electronics assembly 130 of the measuring arrangement 100 for transmitting the measuring value of the process 600 to be detected from the sensor assembly to the electronics assembly 130. The connection and the transmission of the measuring value of the process 600 between the sensor assembly 100 and the electronics assembly 130 may be performed wirelessly, for example via Wi-Fi (wireless fidelity), Bluetooth, NFC (Near Field Communication) or WSNs (Wireless Sensor Networks), and/or via a cable. Accordingly, the electronics assembly 130 may be configured to receive the measuring value of the process 600 to be detected, for example, for a further data processing process.

Further, in step 40, the electronics assembly 130 is allowed to retrieve a characteristic group of the sensor assembly of a given specimen or unit, which comprises a thermal characteristic and/or a mechanical characteristic and/or an electrical characteristic of the sensor assembly. The characteristic group may comprise a plurality of sensorspecific, unique, thermal, mechanical and electrical characteristics or parameters, which may characterize the inherent properties or performance of the sensor assembly 110 since being produced in the factory.

Optionally, the method 1 may comprise, in addition to step 40, the step 45, in which the electronics assembly 130 of the measuring arrangement 100 may further be allowed to retrieve a characteristic model of the sensor assembly for determining a thermal characteristic behavior and/or a mechanical characteristic behavior and/or an electrical characteristic behavior of the sensor assembly 110. The sensors of the sensor assembly 110 may be designed and manufactured to have unique thermal, mechanical and/or electrical behaviors that may need to be characterized and/or modelled. Once being characterized and/or modelled, need to be taken into account in the processing electronics to provide an accurate output of the measuring value or the measured process parameter of the sensed or detected process 600.

Accordingly, the method 1 may further comprise a validation step 10, in which the characteristic group of the sensor assembly 110 and/or the characteristic model of the sensor assembly 110 may be validated or calibrated, by means of the validation assembly 120 of the measuring arrangement 100 as shown in Fig. 2, before the sensor assembly 110 is provided to detect the measuring value of the process to be detected. In other words, the sensor assembly 110 may be connected to the validation assembly 120 as a calibration setup, for example in a factory or a manufacturing station, independently and prior to that the sensor assembly 110 is installed at the process 600 and connected to the electronics assembly 130 for the process measurement.

For example, the thermal characteristic of the sensor assembly 110 may be modelled by a heat transfer equation or a thermal transfer equation that may capture a thermal resistance and a temperature distribution along a construction of the sensor assembly 100 and/or the process pipe in a predefined environment, in which the sensor assembly 110 is applied. Hence, the respective thermal or heat transfer characteristic may be modelled for the sensor assembly 110.

For example, the mechanical characteristic, such as a vibration characteristic, may represent a minute displacement or a strain, a stress level, and/or a frequency-dependent characteristic of a mechanical part of the sensor assembly 110. For example, an electromagnetic characteristic as an electrical characteristic may represent an impedance considering a resistance, an inductance or a capacitance of the sensor assembly 110.

In order to connect the sensor assembly 110 to the electronics 130 in step 30, the method 1 may optionally comprise the step of identifying the sensor assembly 110 by the electronics assembly 130 via a coded approach 113, as shown in Fig. 2, and/or via a non-coded approach, which may be provided at the sensor assembly 110, and/or via a database 500. For example, the sensor or the sensor assembly 110 may be then connected to the electronics assembly 130, so that the model characteristics or parameters associated with the unique ID (identification code) may be inputted into the electronics assembly 130. This may be performed either via a prompt during the setup of the electronics assembly 130 through a human machine interface 135 or through a wireless approach where the unique model characteristics or parameters associated with the sensor assembly 110 may be automatically read into the electronics assembly 130 with technologies such as RFID (Radio-Frequency Identification), Bluetooth packets or other pairing or identification approaches.

Optionally, the validation step 10 for the characteristic group of the sensor assembly 110 and/or the characteristic model of the sensor assembly 110 may additionally comprise the step of storing or saving the characteristic group of the sensor assembly 110 and/or the characteristic model of the sensor assembly 110 in the coded approach 113 and/or the non-coded approach at the sensor assembly 110 and/or in the database 500. For example, during the validation process, the thermal, mechanical and/or electrical characteristics of the characteristic group and/or the respective characteristic behaviors of the characteristic model of the sensor assembly 110 may be validated or calibrated at the manufacturing location using the processing electronics of the sensor assembly 110. Subsequently, the characteristic group and/or the characteristic model may be derived and stored in the database 500 with the identification (ID) of the sensor assembly 110. Alternatively or additionally, the characteristic group and/or the characteristic model may be encoded sensorspeicifically using a encoding unit, which may be integrated in the sensor assembly 110, so that the encoded characteristic group and/or the characteristic model may be stored in an identification unit 115, as shown in Fig. 2, and transmitted to the electronics assembly 130 when being connected and identified by the electronics assembly 130.

Accordingly, the step 40 of allowing the electronics assembly 130 retrieving the characteristic group of the sensor assembly 110 and/or the characteristic model of the sensor assembly 110 may be performed via the coded approach 113 and/or the non-coded approach at the sensor assembly 110 and/or via the database 500.

For example, the database 500 may be arranged in the sensor assembly 110 and/or in the electronics assembly 130 and/or in a server and/or in a cloud system.

In step 50, a second characteristic group of the sensor assembly 110 is determined, which comprises a second thermal characteristic and/or a second mechanical characteristic and/or a second electrical characteristic of the sensor assembly 110 corresponding to the measuring value of the process 600. In other words, the second characteristic group of the sensor assembly 110 is determined, when the sensor assembly 110 is mounted to the process 600 to be detected, and while the sensor assembly 110 is monitoring the process and detecting the measuring value of the process 600, for example in real-time.

Further, the second characteristic group of the sensor assembly 110 may be determined and compared with the characteristic group or the first characteristic group of the sensor assembly 110. For example, if the second characteristic group is identical to the characteristic group of the sensor assembly 100, which may be characterized and modelled during or right after the manufacturing, this may be indicative of a precise and reliable measurement of the sensor assembly and of the measuring arrangement in the application environment.

In case that the second characteristic group differs from the characteristic group of the sensor assembly 100, it may indicate that the environment, in which the sensor assembly 110 is applied, may require to modify or model the characteristic group of the sensor assembly 100 to fit the second characteristic group, for example based on the characteristic model of the sensor assembly 110 and the determined thermal characteristic behavior and/or mechanical characteristic behavior and/or electrical characteristic behavior of the sensor assembly 110. Alternatively, the difference between the second characteristic group and the characteristic group of the sensor assembly 100 may indicate that the sensor assembly 110 may be deficient or not suitable for the applied environment of the process measurement. Hence, the method 1 may advantageously allow a reliable and efficient process measurement by retrieving the unique and pre-characterized, sensorspecific characteristic group or the characteristic model and by determining the second characteristic group of the sensor assembly 110 during the process measurement by means of the measuring arrangement 100.

In the final step 70, the measuring value of the process 600 and/or the characteristic group and/or the second characteristic group of the sensor assembly 110 may be outputted by means of the electronics assembly 130.

Alternatively or additionally, prior to determine in step 50 the second characteristic group of the sensor assembly 110, the step 40 of allowing the electronics assembly 130 retrieving the characteristic group of the sensor assembly 110 may comprise the step 43, in which the characteristic group of the sensor assembly 110 may be modified for detecting the measuring value of the process 600 by changing the thermal characteristic and/or the mechanical characteristic and/or the electrical characteristic of the sensor assembly 110, depending on at least one process parameter comprising a pressure, a speed of sound, a flow rate, a density, a viscosity and/or a thermal conductivity of a medium in the process 600 to be detected, and/or a material type and/or a dimension of a process pipe. In this way, the environment factors or the medium parameters for the process measurement may be taken into consideration, resulting in an accurate and precise evaluation of the process measuring value. For example, the modification of the characteristic group of the sensor assembly 110 for detecting the measuring value of the process may be performed via a human machine interface 135, as shown in Fig. 4. The human machine interface 135 may be integrated into the electronics assembly 130. Alternatively, the human machine interface 135 may be provided separately from and then connected to the electronics assembly 130 when installing the sensor assembly 110 at the process 600.

Optionally, the method 1 may further comprise the step 60 after the step 50 of the determining the second characteristic group of the sensor assembly 110 while the process measurement. In step 60, the measuring value of the process 600 may be adjusted to be a second measuring value of the process 600, after the step 43 of modifying the characteristic group of the sensor assembly 110 and/or the step 50 of determining the second characteristic group of the sensor assembly 110, based on the characteristic model of the sensor assembly 110 by following the determined thermal characteristic behavior and/or the mechanical characteristic behavior and/or the electrical characteristic behavior of the sensor assembly 110.

Accordingly, there may be provided a step 75, in which the second measuring value of the process 600 may be outputted along with the measuring value of the process 600 and/or the characteristic group and/or the second characteristic group of the sensor assembly 110.

Further, the measuring value and/or the adjusted second measuring value of the process 600 may be outputted with the characteristic group and/or the second characteristic group of the sensor assembly 110 by transmitting the measuring value and/or the second measuring value of the process 600 and/or the characteristic group and/or the second characteristic group of the sensor assembly 110 from the electronics assembly 130 to a display assembly and/or a control assembly 300. The display assembly may be configured to display or visualize the detected measuring value or the adjusted second measuring value, based on the modified characteristic group and the characteristic model of the sensor assembly 110, to a user. Alternatively or additionally, the control assembly 300 or the control system may be provided in an automation system, and the control assembly 300 may be configured to receive the measuring value and/or the second measuring value of the process 600 for a further action fo the automation system.

Fig. 2 and Fig. 3 show a measuring arrangement 100, which comprises a sensor assembly 110, an electronic assembly 130, and, optionally, a validation assembly 120 in form of a calibration and validating setup.

The sensor assembly 110 may be configured to detect a measuring value of the process 600, while the electronic assembly 130 may be configured to connect to the sensor assembly 110, so that the measuring value of the process 600 to be detected may be transmitted from the sensor assembly to the electronics assembly 130. Further, the electronics assembly 130 may be configured to retrieve a characteristic group of the sensor assembly 110, which may comprise a thermal characteristic and/or a mechanical characteristic and/or an electrical characteristic of the sensor assembly 110.

The thermal, mechanical and/or electrical characteristics of the characteristic group may be transmitted from the sensor assembly 110 to the electronics assembly 130, for example, via a coded approach 113 and/or a non-coded approach at the sensor assembly 110, and/or via a database 500, which may be arranged in the sensor assembly 110 and/or in a server and/or in a cloud system.

In other words, the sensor assembly 110 may be provided separately from, but connectable with, the electronics assembly 130. Also, the sensor assembly 110 may be provided independently from, but connectable with, the validation assembly 120.

Fig. 2 shows that, when the sensor assembly 110 may be arranged at and connected to the validation assembly 120, for example in a manufacturing location, a characteristic group of the sensor assembly 110 comprising one or more thermal characteristics, one or more mechanical characteristics and/or one or more electrical characteristics may be characterized, validated or calibrated to represent the properties or the performance of the fabricated sensor assembly 110. Alternatively or additionally, a characteristic model of the sensor assembly 110 may also be validated or calibrated by determining a thermal, mechanical and/or electrical characteristic behavior of the sensor assembly 110.

The validation or calibration of the characteristic group, in particular the thermal, mechanical and/or electrical characteristics, of the sensor assembly 110 may be performed by means of processing electronics that may be arranged in or outside the sensor assembly 110. Further, the validated thermal, mechanical and/or electrical characteristics may be derived and stored in the database 500, which may subsequently allow the electronics assembly to retrieve the derived and stored thermal, mechanical and/or electrical characteristics of the sensor assembly 110, as shown in Fig. 4. The derived thermal, mechanical and/or electrical characteristics may be stored with the associated identification or part identification of the sensor assembly 110. Alternatively or additionally, the validated characteristic group, in particular the validated thermal, mechanical and/or electrical characteristics, of the sensor assembly 110 may further be encoded in an encoding unit 112 and derived and stored in a coded approach 113 or a non-coded approach along with the identification, for example via RFID, in an identification unit 115 being arranged at the sensor assembly 110, providing the direct readouts for the electronics assembly 130, when the sensor assembly 110 and the electronics assembly 130 may be connected wirelessly or via cable.

Advantageously, by using the validation assembly for each fabricated sensor assembly 110, the sensorspecific characteristics or parameters may be validated or tested individually for each single sensor assembly 110. As a result, the tolerance of the manufacturing process for the sensor assembly 110 and the measuring arrangement 100 may be increased, and each sensor assembly 110 may comprise the respective individual, unique property and performance parameters, which may be validated and stored to be taken into consideration for the later process measurement. In this way, a strict manufacturing process to produce multiple sensor assemblies 110 with predefined, common sensor parameters or characteristics may not be required. This may increase the fabrication efficiency, simplify the manufacturing process and reduce the production costs for the measuring arrangement 100 and the sensor assembly 110.

In other words, sensor assemblies 110 of the same type may be validated to comprise different characteristic groups, namely different thermal, mechanical and/or electrical characteristics. By contrast, sensor assemblies 110 of various types may be validated, by means of the validation assembly 120, to comprise the same characteristic group, namely the same thermal, mechanical and/or electrical characteristics.

After the unique characteristic of the sensor assembly 110 may be validated, the sensor assembly may be disconnected from the validation assembly 120, and, as shown in Fig. 3. Subsequently, as shown in Fig. 3, the sensor assembly 110 may be provided or installed at the process 600 or in the vicinity of the process 600, for example at a process vessel or a process pipe 600, as a non-invasive sensor assembly. The sensor assembly 110 may then be connected to the separately provided electronics assembly 130 wirelessly or via cable, as described in step 30, and provide the validated sensor readouts of the characteristic group, in particular the thermal, mechanical and/or electrical characteristics of the sensor assembly 110, to the electronics assembly 130. The readout may be performed in step 40, when the electronics assembly 130 may automatically retrieve or read the characteristic group or characteristic parameters as "termed sensor pair value".

Moreover, the electronic assembly 130 may be configured to determine a second characteristic group of the sensor assembly 110 which may comprise a second thermal characteristic and/or a second mechanical characteristic and/or a second electrical characteristic of the sensor assembly 110 corresponding to the measuring value of the process 600.

Alternatively or additionally, as shown in Fig. 4, the electronic assembly 130 may be configured to adapt or modify the characteristic group of the sensor assembly for accurately detecting the measuring value of the process via a human machine interface 135, while retrieving the characteristic group from the sensor assembly 110 in step 40. Either the characteristic thermal, mechanical and/or electrical characteristics may be read from the sensor assembly 110 by a user and inputted by the user into the human machine interface 135 as shown in step 41, and then inputted from the human machine interface 135 into the electronics assembly 130, or the characteristic thermal, mechanical and/or electrical characteristics may be retrieved via step 42 by the electronics assembly 130 directly from the database 500, once the connected sensor assembly 130 may be connected and identified and correlated in the database 500.

Alternatively or additionally, the thermal, mechanical and/or electrical characteristics of the sensor assembly 110 may be modified, for example, depending on at least one process parameter that may comprise a pressure, a speed of sound, a flow rate, a density, a viscosity and/or a thermal conductivity of a medium in the process 600 to be detected, and/or a material type and/or a dimension of a process pipe, and then inputted into the electronics assembly 130. In this way, the same characteristic groups and/or the same characteristic model approach may be used to input the process or location specific characteristics to further enhance the accuracy or performance of the sensor assembly 110. Accordingly, The electronic assembly may be configured to allow adjusting the measuring value of the process to be a second measuring value of the process, based on the modified characteristic group of the sensor assembly and/or the determined second characteristic group. These measuring values may further be inputted into the characteristic model and may either be inputted through the HMI or automatically obtained from the control system 300 in real time.

Finally, Fig. 3 shows that the electronic assembly 130 may be configured to output the measuring value and/or the second measuring value, the characteristic group and/or the second characteristic group of the sensor assembly 110 to a control system 300 of an automation system for evaluation and determination of further actions to be actuated in the automation system.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SIGNS

- 1: method
- 10: validating a characteristic group of a sensor assembly
- 20: providing a sensor assembly for detecting a measuring value of a process
- 30: connecting a sensor assembly to an electronics assembly
- 40: allowing an electronics assembly retrieving a characteristic group of a sensor assembly
- 41: retrieving a characteristic group of a sensor assembly from a sensor assembly
- 42: retrieving a characteristic group of a sensor assembly from a database
- 43: modifying a characteristic group of a sensor assembly via a human machine interface
- 45: allowing an electronics assembly retrieving a characteristic model of a sensor assembly
- 50: determining a second characteristic group of the sensor assembly
- 60: adjusting a measuring value of a process to a second measuring value of the process
- 70: outputting a measuring value of the process and/or a characteristic group and/or a second characteristic group of the sensor assembly
- 75: outputting a second measuring value of the process
- 100: measuring arrangement
- 110: sensor assembly
- 111: processing electronics
- 112: encoding unit
- 113: coded approach
- 115: identification unit
- 120: validation assembly
- 130: electronics assembly
- 135: human machine interface
- 300: control system
- 500: database
- 600: process

## Claims

1. Method (1) for detecting and monitoring a process (600) by means of a measuring arrangement (100) comprising a sensor assembly (110) and an electronics assembly (130), comprising the steps of:
providing (20) the sensor assembly (110) of the measuring arrangement (100) for detecting a measuring value of the process (600) to be detected;
connecting (30) the sensor assembly (110) to the electronics assembly (130) of the measuring arrangement (100) for transmitting the measuring value of the process (600) to be detected from the sensor assembly (110) to the electronics assembly (130);
allowing (40) the electronics assembly (130) retrieving a characteristic group of the sensor assembly (110) comprising a thermal characteristic and/or a mechanical characteristic and/or an electrical characteristic of the sensor assembly (110);
outputting (70), by means of the electronics assembly (130), the measuring value of the process (600) and/or the characteristic group of the sensor assembly (110).

2. The method (1) according to claim 1, further comprising the step of:
determining (50) a second characteristic group of the sensor assembly (110) comprising a second thermal characteristic and/or a second mechanical characteristic and/or a second electrical characteristic of the sensor assembly (110) corresponding to the measuring value of the process (600); and
outputting (70), by means of the electronics assembly (130), the measuring value of the process (600) and/or the characteristic group and/or the second characteristic group of the sensor assembly (110).

3. The method (1) according to claim 1 or 2, further comprising the step of:
allowing (45) the electronics assembly (130) retrieving a characteristic model of the sensor assembly (110) for determining a thermal characteristic behavior and/or a mechanical characteristic behavior and/or an electrical characteristic behavior of the sensor assembly (110).

4. The method (1) according to claim 2 or 3, further comprising the step of:
validating (10) the characteristic group of the sensor assembly (110) and/or the characteristic model of the sensor assembly (110), by means of a validation assembly (120) of the measuring arrangement (100), before the providing (20) the sensor assembly (110) for detecting the measuring value of the process (600) to be detected.

5. The method (1) according to one of the preceding claims,
wherein the connecting (30) the sensor assembly (110) to the electronics assembly (130) comprises the step of identifying the sensor assembly (110) by the electronics assembly (130) via a coded approach (113) and/or a non-coded approach at the sensor assembly (110) and/or via a database (500).

6. The method (1) according to claim 5,
wherein the validating (10) the characteristic group of the sensor assembly (110) and/or the characteristic model of the sensor assembly (110) comprising the step of:
storing the characteristic group of the sensor assembly (110) and/or the characteristic model of the sensor assembly (110) in the coded approach (113) and/or the non-coded approach at the sensor assembly (110) and/or in the database (500);
wherein the allowing (40) the electronics assembly (130) retrieving the characteristic group of the sensor assembly (110) and/or the characteristic model of the sensor assembly (110) is performed via the coded approach (113) and/or the non-coded approach at the sensor assembly (110) and/or via the database (500).

7. The method (1) according to claim 5 or 6,
wherein the database (500) is arranged in the sensor assembly (110) and/or in the electronics assembly (130) and/or in a server and/or in a cloud system.

8. The method (1) according to one of the preceding claims,
wherein, for the determining (50) the second characteristic group of the sensor assembly (110), the allowing (40) the electronics assembly (130) retrieving the characteristic group of the sensor assembly (110) comprises the step of:
modifying (43) the characteristic group of the sensor assembly (110) for detecting the measuring value of the process (600) by changing the thermal characteristic and/or the mechanical characteristic and/or the electrical characteristic of the sensor assembly (110) depending on at least one process parameter comprising a pressure, a speed of sound, a flow rate, a density, a viscosity and/or a thermal conductivity of a medium in the process (600) to be detected, and/or a material type and/or a dimension of a process pipe.

9. The method (1) according to claim 8,
wherein the modifying (43) the characteristic group of the sensor assembly (110) for detecting the measuring value of the process (600) is performed via a human machine interface (135).

10. The method (1) according to claim 8 or 9, further comprising the step of:
adjusting (60) the measuring value of the process (600) to be a second measuring value of the process (600), after the modifying (43) the characteristic group of the sensor assembly (110) and/or the determining (50) the second characteristic group of the sensor assembly (110), based on the characteristic model of the sensor assembly (110) by following the determined thermal characteristic behavior and/or the mechanical characteristic behavior and/or the electrical characteristic behavior of the sensor assembly (110); and
outputting (75) the second measuring value of the process (600) along with the measuring value of the process (600) and/or the characteristic group and/or the second characteristic group of the sensor assembly (110).

11. The method (1) according to claim 10,
wherein the outputting (70, 72) the measuring value and/or the second measuring value of the process (600) and/or the characteristic group and/or the second characteristic group of the sensor assembly (110) is performed by transmitting the measuring value and/or the second measuring value of the process (600) and/or the characteristic group and/or the second characteristic group of the sensor assembly (110) from the electronics assembly (130) to a display assembly and/or a control assembly (300).

12. Measuring arrangement (100) for detecting and monitoring a process (600), comprising:
a sensor assembly (110), configured to detect a measuring value of the process (600), and
an electronics assembly (130), configured to connect to the sensor assembly (110), so that the measuring value of the process (600) to be detected can be transmitted from the sensor assembly (110) to the electronics assembly (130);
wherein the electronics assembly (130) is configured to retrieve a characteristic group of the sensor assembly (110) comprising a thermal characteristic and/or a mechanical characteristic and/or an electrical characteristic of the sensor assembly (110), via a coded approach (113) and/or a non-coded approach at the sensor assembly (110), and/or via a database (500) being arranged in the sensor assembly (110) and/or in a server and/or in a cloud system;
wherein the electronics assembly (130) is configured to output the measuring value of the process (600) and/or the characteristic group of the sensor assembly (110) to a display assembly and/or a control assembly (300).

13. The measuring arrangement (100) according to claim 12,
wherein the electronics assembly (130) is configured to determine a second characteristic group of the sensor assembly (110) comprising a second thermal characteristic and/or a second mechanical characteristic and/or a second electrical characteristic of the sensor assembly (110) corresponding to the measuring value of the process (600);
wherein the electronics assembly (130) is configured to output the measuring value of the process (600) and/or the characteristic group and/or the second characteristic group of the sensor assembly (110) to a display assembly and/or a control assembly (300).

14. The measuring arrangement (100) according to claim 12 or 13,
wherein the electronics assembly (130) is configured to retrieve a characteristic model of the sensor assembly (110) for determining a thermal characteristic behavior and/or a mechanical characteristic behavior and/or an electrical characteristic behavior of the sensor assembly (110);
wherein the electronics assembly (130) is configured to allow modifying (43) the characteristic group of the sensor assembly (110) for detecting the measuring value of the process by means of a human machine interface (135);
wherein the electronics assembly (130) is configured to allow adjusting the measuring value of the process (600) to be a second measuring value of the process (600), after the modifying (43) the characteristic group of the sensor assembly (110) and/or the determining (50) the second characteristic group of the sensor assembly (110), based on the characteristic model of the sensor assembly (110) by following the determined thermal characteristic behavior and/or the mechanical characteristic behavior and/or the electrical characteristic behavior of the sensor assembly (110).

15. The measuring device (100) according to one of the preceding claims 12 ,
wherein the sensor assembly (110) comprises at least one non-invasive sensor.

16. The measuring arrangement (100) according to one of the preceding claims, further comprising:
a validation assembly (120), configured to validate the characteristic group of the sensor assembly (110) and/or the characteristic model of the sensor assembly (110), before the sensor assembly (110) is provided for detecting the measuring value of the process (600) to be detected.

17. Use of a measuring arrangement (100) according to one of the preceding claims 12 to 16 for deriving a process measurement in real-time in an automation system.
